(19) Europäisches Patentamt
European Patent Office
Office européen des brevets

(11) **EP 3 170 303 B1**

(12) **FASCICULE DE BREVET EUROPEEN**

(45) Date de publication et mention
de la délivrance du brevet:
**13.01.2021 Bulletin 2021/02**

(21) Numéro de dépôt: **15738331.6**

(22) Date de dépôt: **15.07.2015**

(51) Int Cl.:
***H04N 5/232*** *(2006.01)*

(86) Numéro de dépôt international:
**PCT/EP2015/066135**

(87) Numéro de publication internationale:
**WO 2016/008911 (21.01.2016 Gazette 2016/03)**

(54) **PROCÉDÉ DE TRAITEMENT DE MOUVEMENTS DE HAUTES FRÉQUENCES DANS UN SYSTÈME OPTRONIQUE, SYSTÈME OPTRONIQUE, PRODUIT PROGRAMME D'ORDINATEUR ET MOYENS DE STOCKAGE**

VERFAHREN ZUR VERARBEITUNG HOCHFREQUENTER BEWEGUNGEN IN EINEM OPTRONISCHEN SYSTEM, OPTRONISCHES SYSTEM, COMPUTERPROGRAMMPRODUKT UND SPEICHERMITTEL

METHOD FOR PROCESSING HIGH-FREQUENCY MOVEMENTS IN AN OPTRONIC SYSTEM, OPTRONIC SYSTEM, COMPUTER PROGRAM PRODUCT AND STORAGE MEANS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.07.2014 FR 1456947**

(43) Date de publication de la demande:
**24.05.2017 Bulletin 2017/21**

(73) Titulaire: **Safran Electronics & Defense SAS
92100 Boulogne-Billancourt (FR)**

(72) Inventeur: **REYMOND, Georges-Olivier
F-92100 Boulogne Billancourt (FR)**

(74) Mandataire: **Cabinet Le Guen Maillet
3, impasse de la Vigie
CS 71840
35418 Saint-Malo Cedex (FR)**

(56) Documents cités:
**EP-A1- 2 420 970    GB-A- 2 447 264
US-A- 5 218 442    US-A1- 2003 197 787**

## Description

La présente invention concerne un procédé et un dispositif de traitement de mouvements de hautes fréquences dans un système optronique et un système optronique mettant en œuvre ledit dispositif et ledit procédé.

Un système optronique tel qu'un appareil photographique, des jumelles, un télescope, un viseur, une boule gyrostabilisée (BGS) équipant un système d'observation aéroporté, met en général en œuvre des techniques de stabilisation d'images. Ces techniques de stabilisation d'images permettent de réduire des flous de bougé dans les images induits par des mouvements plus ou moins volontaires du système optronique. Les techniques de stabilisation d'images permettent donc d'obtenir une amélioration des images en termes de qualité et de précision.

Les techniques de stabilisation d'images peuvent utiliser des méthodes de stabilisation optique. Les méthodes de stabilisation optique consistent à stabiliser une acquisition d'image en faisant varier un chemin optique suivi par un faisceau lumineux représentatif d'une scène vers une surface sensible telle qu'une pellicule ou un capteur. Les méthodes de stabilisation optique comprennent par exemple, des méthodes de stabilisation d'objectif et des méthodes de stabilisation de capteur. Des méthodes connues de stabilisation d'objectif utilisent des lentilles flottantes se déplaçant orthogonalement par rapport à un axe optique de l'objectif à l'aide d'électroaimants. Des mouvements sont détectés par des gyromètres détectant des mouvements horizontaux et verticaux et peuvent ainsi être compensés en contrôlant la position des lentilles flottantes à l'aide des électroaimants. Les méthodes de stabilisation de capteur sont quant à elles dédiées aux appareils numériques. Chaque image nécessitant un temps d'acquisition plus ou moins long en fonction de conditions de luminosité, ces méthodes consistent à déplacer un capteur d'images pendant le temps d'acquisition d'une image de manière à compenser les mouvements d'un appareil numérique.

Les BGS utilisent en général des techniques de stabilisation optiques de type stabilisation d'objectif où ce sont l'objectif et le capteur dans leur ensemble qui sont déplacés.

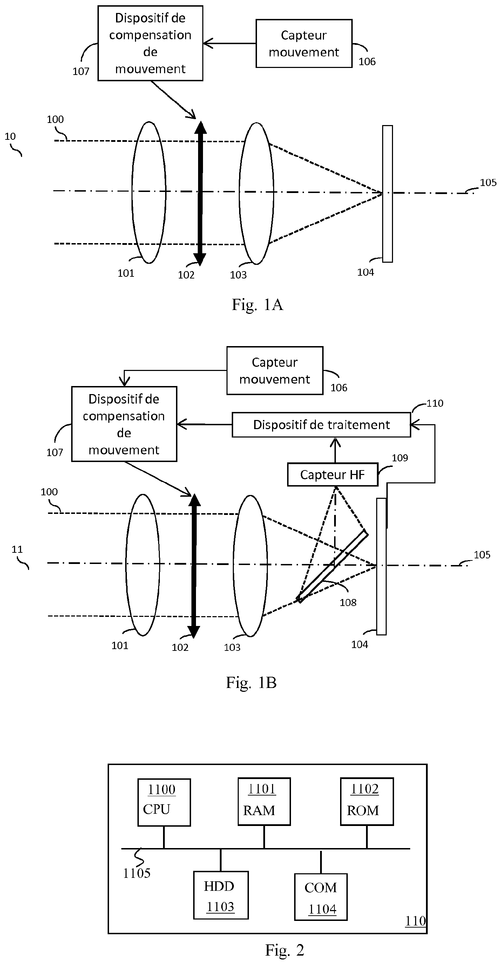

La **Fig. 1A** représente schématiquement un système optronique 10, tel que par exemple un appareil photo, constitué d'un élément optique comprenant par exemple deux groupes de lentilles, tels que les groupes de lentilles 101 et 103, un élément mobile 102 généralement mis en œuvre par une lentille flottante, un capteur d'images 104 tel qu'un capteur CCD (dispositif à charge couplée : « Charge-Coupled Device » en terminologie anglo-saxonne) ou CMOS (semiconducteur métal-oxyde complémentaire : «Complementary Metal-Oxide-Semiconductor » en terminologie anglo-saxonne). Les groupes de lentilles 101 et 103, l'élément mobile 102 et le capteur d'images 104 sont perpendiculaires à un axe optique 105. Les groupes de lentilles 101 et 103 et l'élément mobile 102 font converger un faisceau lumineux 100 vers le capteur d'images 104. Un capteur de mouvement 106, mis en œuvre par exemple par un gyromètre, détermine des mouvements du système optronique et transmet ces informations à un dispositif de compensation de mouvement 107 modifiant la position de l'élément mobile 102 de manière à compenser les mouvements du système optronique 10. Le dispositif de compensation de mouvement 107 est mis en œuvre par exemple par des moteurs ou par des électroaimants. Le capteur d'images 104 produit des images à partir du faisceau lumineux 100 reçu. Les images sont produites à une fréquence d'acquisition de signal (ou fréquence d'acquisition d'images) de l'ordre de quelques dizaines de Hertz et sont transmises en direction d'un afficheur ou d'une mémoire.

Les techniques de stabilisation d'images, telles que celles employées dans les appareils photographique ou les BGS, permettent de compenser des mouvements de basses fréquences et des mouvements de moyennes fréquences. Par contre, ces techniques de stabilisation d'images sont en général peu efficaces pour compenser des mouvements de hautes fréquences. En effet, les mouvements de hautes fréquences sont des mouvements très rapides que seuls des capteurs de mouvements de haute précision sont aptes à capter. Par ailleurs, on considère qu'un système optronique est une structure rigide subissant un mouvement global lorsqu'on applique à ce système des mouvements de basses et moyennes fréquences. Par contre, lorsqu'on applique un mouvement de hautes fréquences à un système optronique, ce système est considéré comme une structure déformable, sur laquelle sont appliqués des micromouvements locaux. Une application des techniques classiques de stabilisation d'images au traitement des mouvements de hautes fréquences pourrait consister à introduire plusieurs capteurs de haute précision dans des structures de système optronique. Cette solution entraîne toutefois un accroissement de complexité et de coût de fabrication des systèmes optroniques.

Certains systèmes optroniques n'ayant pas pour objectif de délivrer des images de haute précision peuvent se permettre de ne pas traiter les mouvements de hautes fréquences. Pour ces systèmes, on considère qu'il est acceptable qu'après compensation des mouvements de basses et moyennes fréquences par les techniques de stabilisation d'images classiques, des mouvements de hautes fréquences résiduelles non compensés peuvent subsister et induire des problèmes de netteté dans les images.

Le document US2003/0197787 A1 divulgue une caméra comprenant un capteur d'image et un système de stabilisation d'image comprenant un capteur de détection de mouvement de la caméra.

Le document US 5,218,442 divulgue une caméra comprenant une pellicule et un système de stabilisation d'image comprenant un capteur de détection de mouvement à fréquence élevée. Contrairement à la présente invention, ces documents ne font pas l'usage de matrice de conversion pour déterminer des valeurs représentatives du mouvement de l'image en cours d'acquisition par le capteur d'images.

La situation est très différente pour les systèmes optroniques demandant une haute précision tels qu'une BGS ou un appareil photographique équipé d'un téléobjectif. En effet, dans ce cas, une image de qualité médiocre pourrait provoquer une mauvaise interprétation du contenu de l'image.

L'invention a pour objectif de résoudre les problèmes mentionnés ci-dessus. L'invention vise notamment à proposer une méthode et un dispositif simple et efficace de traitement des mouvements de hautes fréquences subis par un système optronique et un système optronique mettant en œuvre cette méthode et ce dispositif de traitement des mouvements de hautes fréquences.

A cet effet, selon un premier aspect de la présente invention, la présente invention concerne un procédé de traitement de mouvements de hautes fréquences dans un système optronique tel que défini par la revendication 1. Des modes de réalisation de ce procédé sont définis par les revendications 2 à 7.

De cette manière, des mouvements très faibles peuvent être captés et compensés.

Selon un deuxième aspect de l'invention, l'invention concerne un système optronique tel que défini par la revendication 8. Un mode de réalisation de ce système est défini par la revendication 9.

Selon un troisième aspect de l'invention, l'invention concerne un produit programme d'ordinateur tel que défini par la revendication 10.

Selon un quatrième aspect de l'invention, l'invention concerne des moyens de stockage tels que définis par la revendication 11.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

La Fig. 1A représente schématiquement un exemple de système optronique classique,

La Fig. 1B représente schématiquement un exemple de système optronique mettant en œuvre un dispositif et un procédé de traitement apte à traiter des mouvements de hautes fréquences du système optronique,

La Fig. 2 illustre schématiquement un exemple d'architecture matérielle d'un dispositif de traitement apte à traiter les mouvements de hautes fréquences du système optronique,

La Fig. 3 représente schématiquement une photodiode multi-éléments,

La Fig. 4 représente schématiquement un exemple de procédé de traitement de mouvements de hautes fréquences d'un système optronique mis en œuvre par le dispositif de traitement,

La Fig. 5 représente schématiquement un exemple de procédé de détermination d'une matrice de conversion utilisée dans le procédé de traitement de mouvements de hautes fréquences,

La Fig. 6 illustre une mise en correspondance de pixels d'une image avec des quadrants d'une photodiode multi-éléments utilisée dans le procédé de traitement de mouvements de hautes fréquences.

La **Fig. 1B** représente schématiquement un exemple de système optronique 11 mettant en œuvre un dispositif et un procédé de traitement apte à traiter les mouvements de hautes fréquences du système optronique 11. Le système optronique 11 comprend des éléments identiques au système optronique 10 de la Fig. 1A, chaque élément identique étant représenté par une même référence. Le système optronique 11 comporte néanmoins des éléments supplémentaires permettant le traitement des mouvements de hautes fréquences. Le système optronique 11 comporte un dispositif 108 permettant de rediriger une partie du faisceau lumineux 100 vers un capteur de mouvement optique haute fréquence 109. Le dispositif 108 peut être par exemple un dispositif semi réfléchissant. Le capteur de mouvement haute fréquence 109 peut être par exemple une photodiode multi-éléments (« multi-element photodiode » en terminologie anglo-saxonne, que nous appelons « photodiode ME » par la suite), telle qu'une photodiode deux, quatre ou huit quadrants, une photodiode détectrice de position (« position-sensing photodiode » en terminologie anglo-saxonne) ou un capteur matriciel comportant très peu de pixels mais fonctionnant à haute fréquence. Le capteur de mouvement haute fréquence 109 est apte à fournir des valeurs représentatives d'un mouvement avec une fréquence d'acquisition de signal de l'ordre de quelques KHz. On suppose ici que le capteur d'images et le capteur de mouvement haute fréquence fonctionnent dans des gammes de longueurs d'onde lumineuse similaires et de préférence identiques, de même que ces deux capteurs possèdent des réponses spectrales similaires et de préférence identique dans ces gammes de longueurs d'onde.

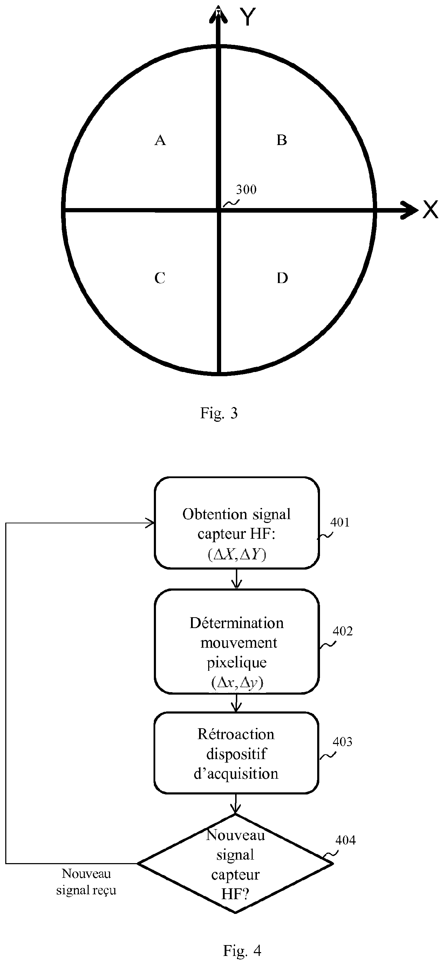

La **Fig. 3** représente schématiquement une photodiode ME. Les photodiodes ME sont des dispositifs couramment utilisés pour effectuer des mises au point dans des lecteurs laser tels que des lecteurs de CD ou de DVD ou dans des satellites pour asservir des lignes de visée laser. Une photodiode ME fonctionne dans la majorité des cas avec une fréquence d'acquisition de signal de quelques KHz. Une photodiode ME est en générale de forme circulaire, comme représentée en Fig. 3, ou carrée. Une photodiode ME est composée de plusieurs quadrants. La Fig. 3 représente une photodiode ME comportant quatre quadrants notés $A, B, C$ et $D$. Chaque quadrant comprend un capteur que nous appelons méga-pixels par la suite. Chaque méga-pixel produit un signal lorsqu'il est touché par un faisceau lumineux. Nous notons $S_A, S_B, S_C$ et $S_D$ les signaux produits respectivement par les méga-pixels des quadrants $A, B, C$ et $D$. Par ailleurs, une photodiode ME produit deux signaux $\Delta X$ et $\Delta Y$. Les signaux $\Delta X$ et $\Delta Y$ sont représentatifs d'un mouvement dans une scène correspondant au faisceau lumineux reçu par la photodiode ME.

Les valeurs des signaux $\Delta X$ et $\Delta Y$ sont reliées aux valeurs des signaux $S_A$, $S_B$, $S_C$ et $S_D$ par les relations suivantes :

$$\Delta X = \frac{-S_A + S_B - S_C + S_D}{S_A + S_B + S_C + S_D};$$

$$\Delta Y = \frac{S_A + S_B - S_C - S_D}{S_A + S_B + S_C + S_D};$$

Les photodiodes ME sont couramment utilisées dans des systèmes optroniques permettant le suivi d'un objet dans une scène. Les objets suivis sont en général des objets de formes connues, tels que par exemple des pointeurs laser générés par des désignateurs laser. Les photodiodes ME possèdent un barycentre correspondant à une position de référence d'un objet suivi. Dans la photodiode ME représentée schématiquement par la Fig. 3, le barycentre de la photodiode ME correspond à la référence 300. Tant qu'un objet suivi est positionné sur le barycentre de la photodiode ME, la photodiode ME produit des signaux $\Delta X$ et $\Delta Y$ nuls. Dès que l'objet suivi s'écarte du barycentre de la photodiode ME, au moins un des signaux $\Delta X$ et $\Delta Y$ devient non nul, ce qui permet par la suite de recaler le système optronique sur l'objet suivi.

Dans le système optronique 11, le faisceau lumineux 100 est transmis simultanément en direction du capteur d'images 104 et du capteur de mouvement haute fréquence 109, chaque capteur recevant une partie du faisceau lumineux 100. De cette manière, des mouvements de hautes fréquences pouvant affecter l'acquisition d'images par le capteur d'images 104 sont détectés et des valeurs représentatives de ces mouvements peuvent être mesurées par le capteur de mouvement haute fréquence 109 avec une fréquence d'acquisition de signal de l'ordre de quelques KHz.

Les valeurs représentatives du mouvement mesurées par des capteurs de mouvement hautes fréquences ne sont, en général, pas utilisables directement par des dispositifs de compensation de mouvement car elles dépendent du contenu de la scène. Dans le cas du système optronique 11, les valeurs représentatives du mouvement sont transmises à un dispositif de traitement 110 déterminant des valeurs de mouvement utilisables par le dispositif de compensation de mouvement 107. Ces valeurs de mouvement utilisables par le dispositif de compensation de mouvement 107 sont représentatives de mouvements dans les images acquises par le capteur d'images 104 et sont mesurées en nombres de pixels. Nous appelons par la suite ces mouvements « mouvements pixeliques ». Il existe une relation directe entre les mouvements pixeliques et les mouvements du système optronique. Les mouvements d'un système optronique qui nous intéressent ici sont des mouvements angulaires. Un système optique possède une distance focale f connue par construction La distance focale f est un paramètre permettant de faire le lien entre un mouvement pixelique et le mouvement angulaire.

Les valeurs représentatives des mouvements pixeliques peuvent donc être utilisées directement par le dispositif de compensation de mouvement 107 pour compenser les mouvements du système optronique. De cette manière, le dispositif de traitement 110 contrôle le dispositif de compensation de mouvement 107 en se basant sur les valeurs des signaux représentatifs de mouvement $\Delta X$ et $\Delta Y$ produits par la photodiode ME 109. Lorsque le capteur de mouvement haute fréquence 109 est une photodiode ME, il existe une relation entre les valeurs des signaux $\Delta X$ et $\Delta Y$ et les valeurs représentatives des mouvements pixeliques.

Lorsque les valeurs représentatives des mouvements pixeliques sont exprimées sous la forme d'une valeur de mouvement horizontal $\Delta x$ et d'une valeur de mouvement vertical $\Delta y$, la relation entre les signaux $\Delta X$ et $\Delta Y$ et les valeurs représentatives des mouvements pixeliques est la suivante :

$$\begin{pmatrix} \Delta X \\ \Delta Y \end{pmatrix} = M . \begin{pmatrix} \Delta x \\ \Delta y \end{pmatrix}$$

où $M$ est une matrice de conversion carrée 2x2 dépendant d'un contenu de la scène visée.

Toutefois les valeurs des mouvements pixeliques pourraient tout aussi bien être exprimées sous la forme de coordonnées polaires comprenant une direction de mouvement $\theta$ et une amplitude de mouvement p. Dans ce cas la relation serait la suivante :

$$\begin{pmatrix} \Delta X \\ \Delta Y \end{pmatrix} = M'.\begin{pmatrix} \rho \\ \theta \end{pmatrix}$$

où $M'$ est une matrice de conversion carrée 2x2 qui dépend d'un contenu de la scène visée.

Lorsque les valeurs représentatives de mouvements pixeliques sont déterminées par le dispositif de traitement 110, elles sont transmises au dispositif de compensation de mouvement 107 pour qu'il puisse compenser ces mouvements pixeliques. Dans un mode de réalisation, la fréquence de transmission des valeurs représentatives des mouvements pixeliques au dispositif de compensation de mouvement 107 est égale à la fréquence d'acquisition de signal du capteur de mouvement haute fréquence 109 (i.e. la fréquence d'acquisition de signal de la photodiode ME). De cette manière, le dispositif de compensation de mouvement 107 peut compenser des mouvements de hautes fréquences. On remarque que le dispositif de compensation de mouvement 107 reçoit toujours des informations représentatives de mouvements de basses et moyennes fréquences de la part du capteur de mouvement 106. Ainsi, le dispositif de compensation de mouvement 107 peut compenser des mouvements de basses, moyennes et hautes fréquences.

La **Fig. 4** représente schématiquement un exemple de procédé de traitement des mouvements de hautes fréquences du système optronique 11 mis en œuvre par le dispositif de traitement 110. Ce procédé comprend l'obtention par le dispositif de traitement 110 d'au moins une valeur d'un signal représentatif de mouvements du système optronique 11. Lorsque le capteur de mouvement hautes fréquences 109 est une photodiode ME, le dispositif de traitement 110 obtient deux valeurs d'un signal représentatif de mouvements pixeliques. Comme nous l'avons vu plus haut, un mouvement pixelique est représentatif d'un mouvement du système optronique. Dans une étape 401, le dispositif de traitement 110 obtient des valeurs des signaux $\Delta X$ et $\Delta Y$ du capteur de mouvement hautes fréquences 109.

Lors d'une étape 402, le dispositif de traitement 110 détermine les valeurs représentatives des mouvements pixeliques de la manière suivante :

$$\begin{pmatrix} \Delta x \\ \Delta y \end{pmatrix} = M^{-1}.\begin{pmatrix} \Delta X \\ \Delta Y \end{pmatrix}$$

où $M^{-1}$ est l'inverse de la matrice de conversion $M$.

Lorsque les valeurs représentatives des mouvements pixeliques sont exprimées en coordonnées polaires, la relation suivante s'applique :

$$\begin{pmatrix} \rho \\ \theta \end{pmatrix} = \left( M' \right)^{-1}.\begin{pmatrix} \Delta X \\ \Delta Y \end{pmatrix}$$

où $M'^{-1}$ est l'inverse de la matrice de conversion $M'$.

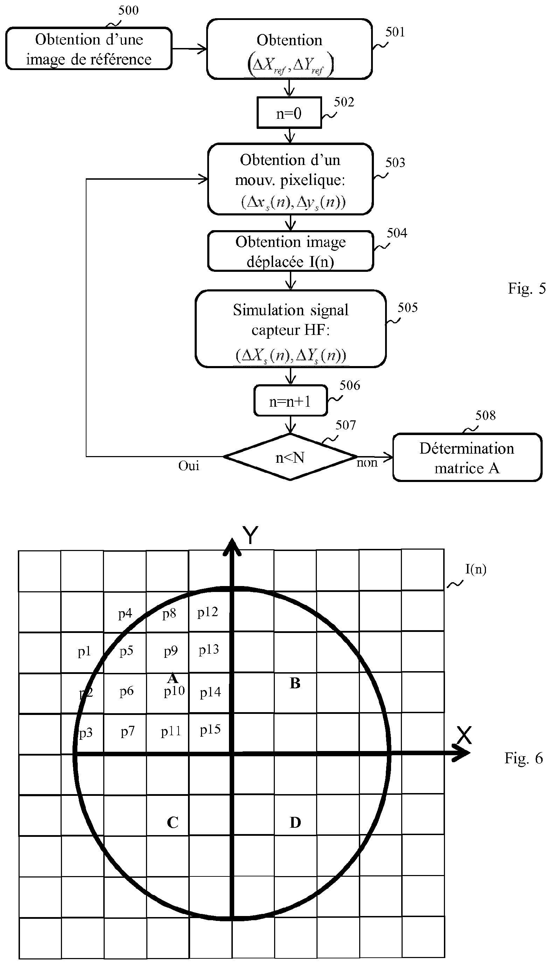

La matrice de conversion $M$ (resp. $M'$) est supposée connue par le dispositif de traitement 110 lors de l'étape 402. Nous décrivons par la suite en relation avec la Fig. 5 un procédé de détermination de la matrice de conversion $M$ (resp. $M'$) mis en œuvre périodiquement par le dispositif de traitement 110.

Dans une étape 403, le dispositif de traitement 110 transmet les valeurs représentatives des mouvements pixeliques ainsi calculées au dispositif de compensation de mouvement 107 afin qu'il puisse mettre en œuvre une rétroaction dans le système optronique pour compenser le mouvement pixelique calculé. Dans ce mode de réalisation, la transmission des valeurs représentatives des mouvements pixeliques suit la fréquence d'acquisition de signal de la photodiode ME. La rétroaction peut donc être mise en œuvre à la fréquence d'acquisition de signal de la photodiode. On obtient donc une rétroaction haute fréquence.

Le dispositif de traitement 110 se met ensuite en attente de réception de nouvelles valeurs des signaux $\Delta X$ et $\Delta Y$ de la part du capteur de mouvement haute fréquence 109. Lorsque de nouvelles valeurs des signaux $\Delta X$ et $\Delta Y$ sont reçues, le dispositif de traitement met de nouveau en œuvre l'étape 401.

Le procédé de détermination des valeurs représentatives des mouvements pixeliques décrit en relation avec la Fig. 4 nécessite la connaissance de la matrice de conversion $M$ (resp. $M'$). Dans les dispositifs optroniques de suivi d'objet ou de mise au point, la matrice de conversion $M$ (resp. $M'$) est en général une matrice constante connue. L'invention adresse le cas des dispositifs optroniques non calibrés tels que les appareils photographiques ou les BGS. Dans ce cas, la matrice de conversion $M$ (resp. $M'$) évolue dans le temps et dépend de la scène sur laquelle est focalisée la photodiode ME. Il est alors nécessaire de déterminer la matrice de conversion $M$ (resp. $M'$) et de remettre à jour cette matrice pour prendre en compte les changements dans la scène sur laquelle est focalisée la photodiode ME.

La **Fig. 5** illustre un exemple de procédé de détermination de la matrice de conversion $M$ (resp. $M'$) mis en œuvre périodiquement par le dispositif de traitement 110. Dans un mode de réalisation, le procédé de détermination de la matrice de conversion $M$ (resp. $M'$) est mis en œuvre par le dispositif de traitement 110 lors de chaque acquisition d'une image par le capteur d'images 104. Une image acquise par le capteur d'images 104 est appelée « image originale » par la suite.

Dans une étape 500, une image originale acquise par le capteur d'images 104 est obtenue par le dispositif de traitement 110. Dans un mode de réalisation, le dispositif de traitement 110 utilise cette image originale comme image de référence lors de la détermination de la matrice de conversion $M$ (resp. $M'$).

Dans une étape 501, le dispositif de traitement 110 simule les signaux $\Delta X_{ref}$ et $\Delta Y_{ref}$ que fournirait la photodiode ME si elle était soumise à un faisceau lumineux correspondant à l'image de référence selon un procédé de simulation que nous expliquons par la suite.

Dans une étape 502, une variable $n$ est initialisée à zéro.

Lors des étapes 503 à 507, le dispositif de traitement 110 applique des mouvements de valeurs prédéterminées à l'image de référence pour obtenir un ensemble d'images déplacées et, pour chaque image déplacée, simule les signaux $\Delta X$ et $\Delta Y$ que fournirait la photodiode ME si elle était soumise à un faisceau lumineux correspondant à l'image déplacée. Ces étapes sont détaillées par la suite.

Lors de l'étape 503, un mouvement pixelique d'une valeur prédéterminée comprenant une valeur de mouvement horizontal $\Delta x_s(n)$ et une valeur de mouvement vertical $\Delta y_s(n)$ (resp. une valeur de direction de mouvement $\theta_s(n)$ et une valeur d'amplitude de déplacement $\rho_s(n)$ dans le cas d'un mouvement exprimé en coordonnées polaires) est obtenu par le dispositif de traitement 110. Cette valeur de mouvement prédéterminée est obtenue par exemple d'une liste de valeurs de mouvements prédéterminées stockée dans une mémoire du dispositif de traitement 110.

Dans une étape 504, une image déplacée I(n) est créée en déplaçant les pixels de l'image de référence de la valeur du mouvement pixelique $(\Delta x_s(n), \Delta y_s(n))$ (resp. $(\theta_s(n), \rho_s(n))$).

Dans une étape 505, le dispositif de traitement met en œuvre un procédé de simulation des valeurs des signaux $\Delta X_s(n)$ et $\Delta Y_s(n)$ que fournirait la photodiode ME si elle était soumise à un faisceau lumineux correspondant à l'image déplacée I(n). Ce procédé de simulation est expliqué par la suite. Lors de cette étape, le dispositif de traitement 110 détermine les valeurs des signaux $S_A$, $S_B$, $S_C$ et $S_D$.

Les valeurs des signaux $\Delta X_s(n)$ et $\Delta Y_s(n)$ sont ensuite calculées de la manière suivante :

$$\Delta X_s(n) = \frac{-S_A + S_B - S_C + S_D}{S_A + S_B + S_C + S_D} - \Delta X_{ref};$$

$$\Delta Y_s(n) = \frac{S_A + S_B - S_C - S_D}{S_A + S_B + S_C + S_D} - \Delta Y_{ref};$$

Lors d'une étape 506, la variable $n$ est incrémentée d'une unité. Lors d'une étape 507, la variable $n$ est comparée à une constante $N$ que nous expliquons par la suite. Lorsque la variable $n$ est inférieure à $N$, le dispositif de traitement 110 crée une nouvelle image déplacée I(n) en retournant à l'étape 503. Une valeur de mouvement pixelique prédéterminée différente de toute autre valeur de mouvement pixelique prédéterminée déjà utilisée pour des images déplacées I(n) créées précédemment est alors obtenue par le dispositif de traitement 110.

Si la variable $n$ est égale à la constante $N$, l'étape 507 est suivie d'une étape 508 au cours de laquelle la matrice de conversion $M$ est déterminée.

La constante $N$ fixe le nombre d'images I(n) nécessaire au calcul de la matrice de conversion $M$ (resp. $M'$). La matrice de conversion $M$ (resp. $M'$) étant une matrice 2x2, elle comporte quatre coefficients. Les coefficients de la matrice de conversion $M$ (resp. $M'$) forment un ensemble de quatre inconnues à déterminer. Pour chaque image déplacée I(n), la relation suivante s'applique:

$$\begin{pmatrix} \Delta X_s(n) \\ \Delta Y_s(n) \end{pmatrix} = M \cdot \begin{pmatrix} \Delta x_s(n) \\ \Delta y_s(n) \end{pmatrix} = \begin{pmatrix} a_{11} & a_{21} \\ a_{12} & a_{22} \end{pmatrix} \cdot \begin{pmatrix} \Delta x_s(n) \\ \Delta y_s(n) \end{pmatrix}$$

ou

$$\begin{pmatrix} \Delta X_s(n) \\ \Delta Y_s(n) \end{pmatrix} = M' \cdot \begin{pmatrix} \rho_s(n) \\ \theta_s(n) \end{pmatrix} = \begin{pmatrix} a'_{11} & a'_{21} \\ a'_{12} & a'_{22} \end{pmatrix} \cdot \begin{pmatrix} \rho_s(n) \\ \theta_s(n) \end{pmatrix}$$

en coordonnées polaires.

Cette relation fournit donc deux équations pour chaque image I(n). Connaissant pour chaque image I(n) les valeurs des signaux $\Delta X_s(n)$ et $\Delta Y_s(n)$ et les valeurs du mouvement pixelique correspondant $(\Delta x_s(n), \Delta y_s(n))$ (resp. $(\theta_s(n), \rho_s(n))$), il est nécessaire et suffisant d'avoir deux images I(n) pour pouvoir calculer les quatre coefficients de la matrice de conversion M (resp. M'). En théorie, il suffit donc de fixer la constante N à la valeur deux pour déterminer la matrice de conversion M (resp. M'). Toutefois, pour éviter d'obtenir des valeurs de coefficient de la matrice de conversion M (resp. M') bruitées, il est préférable de fixer la constante N à une valeur supérieure à deux.

On obtient alors un système de 2N (N>2) équations à quatre inconnues pouvant être résolu de manière classique par une régression linéaire au cours de l'étape 508.

Dès sa détermination, la matrice de conversion M (resp. M') est utilisée par le dispositif de traitement 110 lors de l'étape de détermination de mouvements pixeliques 402.

Comme nous l'avons vu plus haut, le procédé de détermination de la matrice M (resp. M') comprend lors des étapes 501 et 505 un procédé de simulation des valeurs des signaux $\Delta X_{ref}$ et $\Delta Y_{ref}$ et des signaux $\Delta X_s(n)$ et $\Delta Y_s(n)$ que fournirait la photodiode ME si elle était soumise à un faisceau lumineux correspondant respectivement à l'image de référence ou à l'image déplacée I(n). Soit une image $\hat{I}$ pouvant être une image de référence ou une image déplacée I(n). Au cours de la mise en œuvre du procédé de simulation, le dispositif de traitement 110 met en correspondance chaque cadran de la photodiode ME avec un ensemble de pixels de l'image $\hat{I}$. Pour chaque cadran, une somme des valeurs des pixels de l'image $\hat{I}$ correspondants au cadran est calculée. La valeur d'un signal $S_i$ ($i \in \{A,B,C,D\}$) est alors égale à la somme des valeurs des pixels de l'image $\hat{I}$ calculée sur le cadran correspondant. La **Fig. 6** représente un exemple de mise en correspondance de pixels d'une image $\hat{I}$ comportant 100 pixels avec une photodiode quatre quadrants. Dans cet exemple, la valeur du signal $S_A$ est calculée comme la somme des valeurs des pixels p1 à p15 correspondant au cadran A.

Dans le mode de réalisation du système optronique 11 décrit en relation avec la Fig. 1B, un seul dispositif de compensation de mouvement est utilisé pour traiter les mouvements de basses et de moyennes fréquences perçus par le capteur de mouvement 106 et les mouvements de hautes fréquences perçus par le capteur de mouvement haute fréquence 109. Dans un autre mode de réalisation, au moins deux dispositifs de compensation de mouvement sont utilisés. Un premier dispositif traite les mouvements de basses et moyennes fréquences perçus par le capteur de mouvement 106 et un second dispositif traite les mouvements de hautes fréquences perçus par le capteur de mouvement haute fréquence 109.

Dans un mode de réalisation, la matrice de conversion M (resp. M') est mise à jour périodiquement par le procédé de détermination de ladite matrice avec une fréquence plus faible que la fréquence d'acquisition d'images du capteur d'images 104. La fréquence de mise en œuvre du procédé de détermination de la matrice de conversion M (resp. M') peut être aussi adaptative, en fonction par exemple de statistiques sur l'évolution des valeurs des signaux $\Delta X$ et $\Delta Y$. La fréquence peut par exemple être augmentée lorsque les statistiques montrent que le système optronique est dans une période de forts mouvements et diminuée lorsque les statistiques montrent que le système optronique est dans une période de faibles mouvements.

Dans un mode de réalisation, lors de la création des images déplacées, on utilise une image de référence résultant d'une interpolation sub-pixelique de l'image originale obtenue par le capteur d'images 104 plutôt que directement l'image originale. L'interpolation sub-pixelique utilisée peut être une interpolation au demi, au quart ou au huitième de pixel. De cette manière, des mouvements de hautes fréquences de faible amplitude pourront aussi être traités par le dispositif de compensation de mouvement 107. L'interpolation sub-pixelique peut être adaptative en fonction par exemple de statistiques sur l'évolution des valeurs des signaux $\Delta X$ et $\Delta Y$. L'interpolation peut être supprimée lorsque les statistiques montrent que le système optronique est dans une période de forts mouvements. Une interpolation au demi ou au quart de pixel peut être utilisée lorsque les statistiques montrent que le système optronique est dans une période de mouvements moyens. Une interpolation au huitième de pixel peut être utilisée lorsque les statistiques montrent que le système optronique est dans une période de mouvements faibles.

Dans un mode de réalisation, la fréquence de transmission des valeurs représentatives des mouvements pixeliques au dispositif de compensation de mouvement 107 est inférieure à la fréquence d'acquisition de signal du capteur de mouvement haute fréquence 109 (i.e. la fréquence d'acquisition de signal de la photodiode ME) tout en restant supérieure à la fréquence d'acquisition de signal du capteur d'images 104. La fréquence de transmission des valeurs représentatives des mouvements pixeliques au dispositif de compensation de mouvement 107 peut être fixée de manière adaptative en fonction de statistiques sur les signaux $\Delta X$ et $\Delta Y$. Par exemple, lorsque les statistiques montrent que les signaux $\Delta X$ et $\Delta Y$ varient peu au cours du temps, la fréquence de transmission des valeurs représentatives des mouvements pixeliques au dispositif de compensation de mouvement 107 peut être réduite. Par contre, lorsque les statistiques montrent que les signaux ΔX et ΔY varient rapidement au cours du temps, la fréquence de transmission des valeurs représentatives des mouvements pixeliques au dispositif de compensation de mouvement 107 peut être augmentée.

Jusque là, nous avons supposé que les images générées par le capteur d'images n'avaient qu'une composante. Ces images peuvent par exemple être des images en niveau de gris.

Dans un mode de réalisation, les images générées par le capteur d'images 104 sont des images multi-composantes telles que des images RGB. Dans ce cas, chaque pixel d'une image générée par le capteur d'images comprend trois composantes.

Lors des étapes 501 et 505, le dispositif de traitement 110 simule le signal que générerait la photodiode ME 109 si elle était soumise à un signal lumineux correspondant à une image donnée. Lors de ce calcul, la somme des valeurs des pixels compris dans chaque cadran de la photodiode est calculée. Dans le cas de pixels comprenant plusieurs composantes, la valeur d'un pixel est donnée par une combinaison linéaire des composantes. Par exemple, pour un pixel comprenant une composante rouge (R), une composante verte (G) et une composante B bleue (B), la valeur $p$ du pixel utilisée dans la simulation est :

$$p = a.R + b.G + c.B$$

Les coefficients $a$, $b$ et c dépendent à la fois de caractéristiques de réponse spectrale du capteur d'images 104 et de la photodiode ME 109. Les coefficients $a$, $b$ et c sont supposés connus par construction.

Dans un mode de réalisation, le capteur haute fréquence 109 et le capteur d'images 104 possèdent des réponses spectrales différentes. Il est important que les réponses spectrales des deux capteurs soient le plus proche possible et idéalement que ces réponses spectrales soient identiques. Si, par exemple, il y a une zone rouge dans une scène et que le capteur d'images 104 n'est pas sensible à cette couleur, il est difficile de simuler correctement les signaux produits par la photodiode ME 109 puisque l'image obtenue par le capteur d'images 104 ne contient pas cette information.

Afin de corriger cette situation, un filtre correcteur est inséré devant le capteur d'images 104. Le filtre correcteur a pour fonction de corriger des différences dans les réponses spectrales des deux capteurs. La réponse spectrale d'un capteur est représentée par une courbe d'efficacité quantique. Le filtre correcteur est ajusté de manière à ce que la courbe d'efficacité quantique du capteur d'images 104 après filtrage du faisceau lumineux 100 par le filtre correcteur soit le plus proche possible de la courbe d'efficacité quantique du capteur haute fréquence 109. Le filtre correcteur peut être mis en œuvre par un filtre coloré utilisé pour obtenir un ajustement grossier sur lequel est ajouté un empilement de couches minces pour obtenir un ajustement fin du filtre.

Dans un mode de réalisation, le filtre correcteur est placé devant la photodiode ME 109.

Dans un mode de réalisation, un filtre correcteur est placé devant la photodiode ME 109 et devant le capteur d'images 104.

Dans un mode de réalisation, la photodiode ME est remplacée par une photodiode détectrice de position. Une photodiode détectrice de position fournit la position d'un barycentre d'une image appelé « barycentre photométrique ». Un mouvement de l'image provoque un mouvement de son barycentre ce qui provoque des variations d'un signal produit par la photodiode détectrice de position.

Le procédé de traitement de mouvements de hautes fréquences décrit en relation avec la Fig. 4 et le procédé de détermination de la matrice de conversion $M$ restent identiques. Toutefois les valeurs des signaux ΔX et ΔY calculés en simulation lors des étapes 501 et 505 sont des coordonnées du barycentre de l'image. Si une image contient $N_p$ pixels, chaque pixel ayant une valeur $pi$ et des coordonnées $(x_i, y_i)$, alors les coordonnées du barycentre sont :

$$\Delta X = \Sigma(p_i * x_i) / \Sigma p_i$$

$$\Delta Y = \Sigma(p_i * y_i) / \Sigma p_i$$

ou $i$ est une variable variant de « 1 » à $N_p$

La **Fig. 2** illustre schématiquement un exemple d'architecture matérielle du dispositif de traitement 110. Le dispositif de traitement 110 comporte, reliés par un bus de communication 1105 : un processeur ou CPU (« Central Processing Unit » en anglais) 1100; une mémoire vive RAM (« Random Access Memory » en anglais) 1101; une mémoire morte ROM (« Read Only Memory » en anglais) 1102; une unité de stockage 1103 ou un lecteur de support de stockage, tel qu'un lecteur de cartes SD (« Secure Digital » en anglais) ou de clés USB (« Universal Serial Bus » en anglais) ou un disque dur HDD (« Hard Disk Drive » en anglais); au moins une interface 1104 permettant d'échanger des données avec d'autres dispositifs. L'interface 1104 permet par exemple au dispositif de traitement 110 de recevoir des valeurs de signaux $\Delta X$ et $\Delta Y$ de la part du capteur haute fréquence 109 et des images originales de la part du capteur d'images 104.

Le processeur 1100 est capable d'exécuter des instructions chargées dans la RAM 1101 à partir de la ROM 1102, d'une mémoire externe (non représentée), d'un support de stockage, ou d'un réseau de communication. Lorsque le dispositif de traitement 110 est mis sous tension, le processeur 1100 est capable de lire de la RAM 1101 des instructions et de les exécuter. Ces instructions forment un programme d'ordinateur causant la mise en œuvre, par le processeur 1100, de tout ou partie des algorithmes et étapes décrits en relation avec le dispositif de traitement 110 et les Figs. 4 et 5.

Tout ou partie des algorithmes et étapes décrits précédemment peut ainsi être implémenté sous forme logicielle par exécution d'un ensemble d'instructions par une machine programmable, tel qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais).

## Revendications

1. Procédé de traitement de mouvements de hautes fréquences dans un système optronique comprenant un capteur d'images (104) fonctionnant avec une première fréquence d'acquisition de signal, dite fréquence image, chaque image obtenue par le capteur d'images étant représentative d'une scène, **caractérisé en ce que** le procédé comprend les étapes suivantes de:

   obtention (401) de valeurs de signaux représentatifs d'un mouvement de la dite scène de la part d'un capteur de mouvement haute fréquence (109), le capteur de mouvement haute fréquence générant des valeurs de signaux représentatifs de mouvements dans ladite scène avec une seconde fréquence d'acquisition de signal, dite fréquence mouvement, supérieure à la fréquence image ;
   détermination (402) de valeurs représentatives d'un mouvement dans une image en cours d'acquisition par le capteur d'images à partir des valeurs des signaux représentatifs du mouvement de ladite scène, la détermination des valeurs représentatives du mouvement dans l'image en cours d'acquisition par le capteur d'images comprend une opération matricielle entre les valeurs des signaux représentatifs du mouvement de ladite scène et une matrice de conversion ;
   transmission (403) des valeurs représentatives du mouvement dans l'image en cours d'acquisition par le capteur d'images ainsi déterminées à un dispositif de compensation de mouvements (107) afin que ledit dispositif de compensation de mouvements puisse mettre en œuvre une rétroaction dans le système optronique pour compenser le mouvement dans l'image en cours d'acquisition par le capteur d'images, la rétroaction étant mise en œuvre dans le système optronique avec une fréquence inférieure ou égale à la fréquence mouvement et consistant à modifier une position d'un élément mobile (102) contribuant à faire converger un faisceau lumineux (100) vers le capteur d'images (104), le capteur d'images (104) produisant chaque image à partir dudit faisceau lumineux (100) ;
   une matrice inverse de la matrice de conversion étant déterminée par un procédé de détermination comprenant les étapes suivantes de:

      - obtention (500) d'une image de référence à partir d'une image originale acquise par le capteur d'images,
      - simulation (501) de premières valeurs des signaux représentatifs d'un mouvement obtenues par le capteur de mouvement haute fréquence lorsque le capteur de mouvement haute fréquence est soumis à un faisceau lumineux correspondant à l'image de référence,
      - application (504) de mouvements de valeurs de mouvement prédéterminées à l'image de référence pour obtenir un ensemble d'images déplacées,
      - pour chaque image déplacée de l'ensemble d'images déplacées, simulation (505) de secondes valeurs des signaux représentatifs d'un mouvement obtenues par le capteur de mouvement haute fréquence lorsque le capteur de mouvement haute fréquence est soumis à un faisceau lumineux correspondant à l'image déplacée,
      - détermination (508) de la matrice inverse de la matrice de conversion à partir des premières et secondes valeurs des signaux représentatifs d'un mouvement obtenues par le capteur de mouvement haute fréquence et des valeurs de mouvement prédéterminées.

2. Procédé selon la revendication 1, **caractérisé en ce que** le capteur de mouvement haute fréquence est une photodiode multi-éléments.

3. Procédé selon la revendication 1 ou 2, **caractérisé en ce que** la matrice de conversion est mise à jour périodiquement à une fréquence inférieure ou égale à la fréquence image.

4. Procédé selon la revendication 1, 2 ou 3, **caractérisé en ce que** pour chaque image de référence déplacée, les valeurs de mouvement prédéterminées comprennent une valeur de mouvement horizontal et une valeur de mouvement vertical.

5. Procédé selon la revendication 1, 2 ou 3, **caractérisé en ce que** pour chaque image de référence déplacée, les valeurs de mouvement prédéterminées comprennent une valeur de direction de mouvement et une valeur d'amplitude de mouvement.

6. Procédé selon l'une quelconque des revendications précédentes, **caractérisé en ce que** l'ensemble d'images de référence déplacées comprend au moins deux images.

7. Procédé selon l'une quelconque des revendications précédentes, **caractérisé en ce que** l'image de référence résulte d'une application d'une interpolation sub-pixelique à l'image originale obtenue par le capteur d'images.

8. Système optronique comprenant un capteur d'images (104) fonctionnant avec une première fréquence d'acquisition de signal, chaque image obtenue par le capteur d'images étant représentative d'une scène, et un dispositif de compensation de mouvement (107), **caractérisé en ce que** le système comprend:

un capteur de mouvement haute fréquence (109) générant des valeurs de signaux représentatifs de mouvements dans ladite scène avec une seconde fréquence d'acquisition de signal supérieure à la première fréquence d'acquisition de signal, et un dispositif (110) de traitement de mouvements de hautes fréquences , ledit dispositif (110) de traitement de mouvements comprenant :
des moyens d'obtention (401) de valeurs de signaux représentatifs d'un mouvement de la dite scène de la part dudit capteur de mouvement haute fréquence (109),
des moyens de détermination (402) de valeurs représentatives d'un mouvement dans une image en cours d'acquisition par le capteur d'images à partir des valeurs des signaux représentatifs du mouvement de ladite scène, les moyens de détermination des valeurs représentatives du mouvement dans l'image en cours d'acquisition par le capteur d'images comprenant des moyens de mise en œuvre d'une opération matricielle entre les valeurs des signaux représentatifs du mouvement de ladite scène et une matrice de conversion ;
des moyens de transmission (403) des valeurs représentatives du mouvement dans l'image en cours d'acquisition par le capteur d'images déterminées audit dispositif de compensation de mouvements (107) afin que ledit dispositif de compensation de mouvements puisse mettre en œuvre une rétroaction dans le système optronique pour compenser le mouvement dans l'image en cours d'acquisition par le capteur d'images, la rétroaction étant mise en œuvre dans le système optronique avec une fréquence inférieure ou égale à la fréquence mouvement et consistant à modifier une position d'un élément mobile (102) contribuant à faire converger un faisceau lumineux (100) vers le capteur d'images (104), le capteur d'images (104) produisant chaque image à partir dudit faisceau lumineux (100) ;
ledit dispositif comprenant en outre des moyens de détermination d'une matrice inverse de la matrice de conversion comprenant:

- des moyens d'obtention (500) d'une image de référence à partir d'une image originale acquise par le capteur d'images,
- des moyens de simulation (501) de premières valeurs des signaux représentatifs d'un mouvement obtenues par le capteur de mouvement haute fréquence lorsque le capteur de mouvement haute fréquence est soumis à un faisceau lumineux correspondant à l'image de référence,
- des moyens d'application (504) de mouvements de valeurs de mouvement prédéterminées à l'image de référence pour obtenir un ensemble d'images déplacées,
- des moyens de simulation (505), pour chaque image déplacée de l'ensemble d'images déplacées, de secondes valeurs des signaux représentatifs d'un mouvement obtenues par le capteur de mouvement haute fréquence lorsque le capteur de mouvement haute fréquence est soumis à un faisceau lumineux correspondant à l'image déplacée, et,
- des moyens de détermination (508) de la matrice inverse de la matrice de conversion à partir des premières et secondes valeurs des signaux représentatifs d'un mouvement obtenues par le capteur de mouvement haute fréquence et des valeurs de mouvement prédéterminées.

9. Système selon la revendication 8, dans lequel un filtre correcteur est inséré devant le capteur d'images et/ou devant le capteur haute fréquence afin de compenser une différence entre une réponse spectrale du capteur d'images et une réponse spectrale du capteur de mouvement haute fréquence.

10. Produit programme d'ordinateur, **caractérisé en ce qu'**il comporte des instructions pour mettre en œuvre, par un dispositif (110) de traitement de mouvements de hautes fréquences appartenant à un système selon la revendication 8, le procédé selon l'une quelconque des revendications 1 à 7, lorsque ledit programme est exécuté par un processeur dudit dispositif.

11. Moyens de stockage, **caractérisés en ce qu'**ils stockent un programme d'ordinateur comportant des instructions pour mettre en œuvre, par un dispositif (110) de traitement de mouvements de hautes fréquences appartenant à un système selon la revendication 8, le procédé selon l'une quelconque des revendications 1 à 7 lorsque ledit programme est exécuté par un processeur dudit dispositif.

**Patentansprüche**

1. Verfahren zur Verarbeitung hochfrequenter Bewegungen in einem optronischen System umfassend einen Bildsensor (104), der mit einer ersten Signalerfassungsfrequenz, der Bildfrequenz, arbeitet, wobei jedes Bild, das vom Bildsensor erhalten wird, für eine Szene repräsentativ ist, **dadurch gekennzeichnet, dass** das Verfahren die folgenden Schritte umfasst:

   Erhalten (401) von Werten von Signalen, die für eine Bewegung der Szene repräsentativ ist, von einem Hochfrequenzbewegungssensor (109), wobei der Hochfrequenzbewegungssensor Werte von Signalen, die für Bewegungen in der Szene repräsentativ sind, mit einer zweiten Signalerfassungsfrequenz, der Bewegungsfrequenz, erzeugt, die höher als die Bildfrequenz ist;
   Bestimmen (402) von Werten, die für eine Bewegung in einem Bild repräsentativ sind, das vom Bildsensor erfasst wird, ausgehend von den Werten der Signale, die für die Bewegung der Szene repräsentativ sind, wobei das Bestimmen der Werte, die für die Bewegung in dem Bild repräsentativ sind, das vom Bildsensor erfasst wird, eine Matrixoperation zwischen den Werten der Signale, die für die Bewegung der Szene repräsentativ sind, und einer Umwandlungsmatrix umfasst;
   Übertragen (403) der Werte, die für die Bewegung in dem Bild repräsentativ sind, das vom Bildsensor erfasst wird, die so bestimmt wurden, an eine Bewegungsausgleichsvorrichtung (107), damit die Bewegungsausgleichsvorrichtung eine Rückwirkung im optronischen System durchführen kann, um die Bewegung in dem Bild auszugleichen, das vom Bildsensor erfasst wird,
   wobei die Rückwirkung mit einer Frequenz kleiner oder gleich der Bewegungsfrequenz im optronischen System durchgeführt wird und darin besteht, eine Position eines beweglichen Elements (102) zu verändern, das dazu beiträgt, ein Lichtbündel (100) in Richtung des Bildsensors (104) zusammenlaufen zu lassen, wobei der Bildsensor (104) jedes Bild ausgehend von dem Lichtbündel (100) erzeugt;
   wobei eine inverse Matrix der Umwandlungsmatrix durch ein Bestimmungsverfahren bestimmt wird, das die folgenden Schritte umfasst:

   - Erhalten (500) eines Bezugsbilds ausgehend von einem Ursprungsbild, das vom Bildsensor erfasst wurde,
   - Simulieren (501) erster Werte der Signale, die für eine Bewegung repräsentativ sind, die vom Hochfrequenzbewegungssensor erhalten werden, wenn der Hochfrequenzbewegungssensor einem Lichtbündel ausgesetzt ist, das dem Bezugsbild entspricht,
   - Anwenden (504) von Bewegungen vorbestimmter Bewegungswerte auf das Bezugsbild, um eine Menge versetzter Bilder zu erhalten,
   - für jedes versetzte Bild der Menge versetzter Bilder, Simulieren (505) zweiter Werte der Signale, die für eine Bewegung repräsentativ sind, die vom Hochfrequenzbewegungssensor erhalten werden, wenn der Hochfrequenzbewegungssensor einem Lichtbündel ausgesetzt ist, das dem versetzten Bild entspricht,
   - Bestimmen (508) der inversen Matrix der Umwandlungsmatrix ausgehend von den ersten und zweiten Werten der Signale, die für eine Bewegung repräsentativ sind, die vom Hochfrequenzbewegungssensor erhalten werden, und den vorbestimmten Bewegungswerten.

2. Verfahren nach Anspruch 1, **dadurch gekennzeichnet, dass** der Hochfrequenzbewegungssensor eine Mehrelement-Photodiode ist.

3. Verfahren nach Anspruch 1 oder 2, **dadurch gekennzeichnet, dass** die Umwandlungsmatrix periodisch mit einer Frequenz kleiner oder gleich der Bildfrequenz aktualisiert wird.

4. Verfahren nach Anspruch 1, 2 oder 3, **dadurch gekennzeichnet, dass** für jedes versetzte Bezugsbild die vorbestimmten Bewegungswerte einen Horizontalbewegungswert und einen Vertikalbewegungswert umfassen.

5. Verfahren nach Anspruch 1, 2 oder 3, **dadurch gekennzeichnet, dass** für jedes versetzte Bezugsbild die vorbestimmten Bewegungswerte einen Bewegungsrichtungswert und eine Bewegungsamplitudenwert umfassen.

6. Verfahren nach einem der vorhergehenden Ansprüche, **dadurch gekennzeichnet, dass** die Menge versetzter Bezugsbilder mindestens zwei Bilder umfasst.

7. Verfahren nach einem der vorhergehenden Ansprüche, **dadurch gekennzeichnet, dass** das Bezugsbild aus einer Anwendung einer Subpixel-Interpolation auf das Ursprungsbild, das vom Bildsensor erhalten wird, hervorgeht.

8. Optronisches System umfassend einen Bildsensor (104), der mit einer ersten Signalerfassungsfrequenz arbeitet, wobei jedes Bild, das vom Bildsensor erhalten wird, für eine Szene repräsentativ ist, und eine Bewegungsausgleichsvorrichtung (107), **dadurch gekennzeichnet, dass** das System Folgendes umfasst:

einen Hochfrequenzbewegungssensor (109), der Werte von Signalen, die für Bewegungen in der Szene repräsentativ sind, mit einer zweiten Signalerfassungsfrequenz erzeugt, die höher als die erste Signalerfassungsfrequenz ist, und

eine Vorrichtung (110) zur Verarbeitung hochfrequenter Bewegungen, die Vorrichtung (110) zur Verarbeitung von Bewegungen umfassend:

Mittel zum Erhalten (401) von Werten von Signalen, die für eine Bewegung der Szene repräsentativ ist, vom Hochfrequenzbewegungssensor (109),

Mittel zum Bestimmen (402) von Werten, die für eine Bewegung in einem Bild repräsentativ sind, das vom Bildsensor erfasst wird, ausgehend von den Werten der Signale, die für die Bewegung der Szene repräsentativ sind, wobei die Mittel zum Bestimmen der Werte, die für die Bewegung in dem Bild repräsentativ sind, das vom Bildsensor erfasst wird, Mittel zum Durchführen einer Matrixoperation zwischen den Werten der Signale, die für die Bewegung der Szene repräsentativ sind, und einer Umwandlungsmatrix umfassen;

Mittel zum Übertragen (403) der Werte, die für die Bewegung in dem Bild repräsentativ sind, das vom Bildsensor erfasst wird, die bestimmt wurden, an die Bewegungsausgleichsvorrichtung (107), damit die Bewegungsausgleichsvorrichtung eine Rückwirkung im optronischen System durchführen kann, um die Bewegung in dem Bild auszugleichen, das vom Bildsensor erfasst wird,

wobei die Rückwirkung mit einer Frequenz kleiner oder gleich der Bewegungsfrequenz im optronischen System durchgeführt wird und darin besteht, eine Position eines beweglichen Elements (102) zu verändern, das dazu beiträgt, ein Lichtbündel (100) in Richtung des Bildsensors (104) zusammenlaufen zu lassen, wobei der Bildsensor (104) jedes Bild ausgehend von dem Lichtbündel (100) erzeugt;

die Vorrichtung ferner umfassend Mittel zum Bestimmen einer inversen Matrix der Umwandlungsmatrix, umfassend:

- Mittel zum Erhalten (500) eines Bezugsbilds ausgehend von einem Ursprungsbild, das vom Bildsensor erfasst wurde,
- Mittel zum Simulieren (501) erster Werte der Signale, die für eine Bewegung repräsentativ sind, die vom Hochfrequenzbewegungssensor erhalten werden, wenn der Hochfrequenzbewegungssensor einem Lichtbündel ausgesetzt ist, das dem Bezugsbild entspricht,
- Mittel zum Anwenden (504) von Bewegungen vorbestimmter Bewegungswerte auf das Bezugsbild, um eine Menge versetzter Bilder zu erhalten,
- Mittel zum Simulieren (505), für jedes versetzte Bild der Menge versetzter Bilder, zweiter Werte der Signale, die für eine Bewegung repräsentativ sind, die vom Hochfrequenzbewegungssensor erhalten werden, wenn der Hochfrequenzbewegungssensor einem Lichtbündel ausgesetzt ist, das dem versetzten Bild entspricht, und
- Mittel zum Bestimmen (508) der inversen Matrix der Umwandlungsmatrix ausgehend von den ersten und zweiten Werten der Signale, die für eine Bewegung repräsentativ sind, die vom Hochfrequenzbewegungssensor erhalten werden, und den vorbestimmten Bewegungswerten.

9. System nach Anspruch 8, wobei ein Korrekturfilter vor dem Bildsensor und/oder vor dem Hochfrequenzsensor eingefügt ist, um eine Differenz zwischen einer Spektralempfindlichkeit des Bildsensors und einer Spektralempfindlichkeit des Hochfrequenzbewegungssensors auszugleichen.

10. Computerprogrammprodukt, **dadurch gekennzeichnet, dass** es Anweisungen aufweist, um durch eine Vorrichtung (110) zur Verarbeitung hochfrequenter Bewegungen, die zu einem System nach Anspruch 8 gehört, das Verfahren nach einem der Ansprüche 1 bis 7 durchzuführen, wenn das Programm von einem Prozessor der Vorrichtung ausgeführt wird.

11. Speichermittel, **dadurch gekennzeichnet, dass** sie ein Computerprogramm speichern, das Anweisungen aufweist, um durch eine Vorrichtung (110) zur Verarbeitung hochfrequenter Bewegungen, die zu einem System nach Anspruch 8 gehört, das Verfahren nach einem der Ansprüche 1 bis 7 durchzuführen, wenn das Programm von einem Prozessor der Vorrichtung ausgeführt wird.

## Claims

1. Method for processing high-frequency movements in an optronic system comprising an image sensor (104) operating with a first signal-acquisition frequency, called the image frequency, each image obtained by the image sensor being representative of a scene, **characterized in that** the method comprises the following steps:

   obtaining (401) values of signals representative of a movement of said scene from a high-frequency movement sensor (109), the high-frequency movement sensor generating values of signals representative of movements in said scene with a second signal-acquisition frequency, called the movement frequency, higher than the image frequency;
   determining (402) values representative of a movement in an image being acquired by the image sensor from the values of the signals representative of the movement of said scene, the determination of the values representative of the movement in the image being acquired by the image sensor comprising a matrix operation between the values of the signals representative of the movement of said scene and a conversion matrix;
   transmitting (403) the values representative of the movement in the image being acquired by the image sensor that are thus determined to a movement-compensating device (107) in order that said movement-compensating device may provide a feedback in the optoelectronic system in order to compensate for the movement in the image being acquired by the image sensor, the feedback being provided in the optoelectronic system with a frequency lower than or equal to the movement frequency and consisting in modifying a position of a movable element (102) contributing to make a light beam (100) converge toward the image sensor (104), the image sensor (104) producing each image from said light beam (100);
   an inverse matrix of the conversion matrix being determined via a determining method comprising the following steps:

   - obtaining (500) a reference image from an original image acquired by the image sensor,
   - simulating (501) first values of the signals representative of a movement, these values corresponding to those obtained by the high-frequency movement sensor when the high-frequency movement sensor is subjected to a light beam corresponding to the reference image,
   - applying (504) movements of preset movement values to the reference image to obtain a set of displaced images,
   - for each displaced image of the set of displaced images, simulating (505) second values of the signals representative of a movement, these values corresponding to those obtained by the high-frequency movement sensor when the high-frequency movement sensor is subjected to a light beam corresponding to the displaced image,
   - determining (508) the inverse matrix of the conversion matrix on the basis of the first and second values of the signals representative of a movement, which values are obtained by the high-frequency movement sensor, and of the preset movement values.

2. Method according to Claim 1, **characterized in that** the high-frequency movement sensor is a multi-element photodiode.

3. Method according to Claim 1 or 2, **characterized in that** the conversion matrix is updated periodically at a frequency lower than or equal to the image frequency.

4. Method according to Claim 1, 2 or 3, **characterized in that**, for each displaced reference image, the preset movement values comprise a horizontal-movement value and a vertical-movement value.

5. Method according to Claim 1, 2 or 3, **characterized in that**, for each displaced reference image, the preset movement values comprise a movement-direction value and a movement-amplitude value.

6. Method according to any one of the preceding claims, **characterized in that** the set of displaced reference images comprises at least two images.

7. Method according to any one of the preceding claims, **characterized in that** the reference image results from an application of a sub-pixel interpolation to the original image obtained by the image sensor.

8. Optronic system comprising an image sensor (104) operating with a first signal-acquisition frequency, each image obtained by the image sensor being representative of a scene, and a movement-compensating device (107), **characterized in that** the system comprises:

   a high-frequency movement sensor (109) that generates values of signals representative of movements in said scene with a second signal-acquisition frequency higher than the first signal-acquisition frequency; and
   a device (110) for processing high-frequency movements, said movement-processing device (110) comprising:

      means for obtaining (401) values of signals representative of a movement of said scene from said high-frequency movement sensor (109),
      means for determining (402) values representative of a movement in an image being acquired by the image sensor from the values of the signals representative of the movement of said scene, the means for determining the values representative of the movement in the image being acquired by the image sensor comprising a means for implementing a matrix operation between the values of the signals representative of the movement of said scene and a conversion matrix;
      means for transmitting (403) the values representative of the movement in the image being acquired by the image sensor that are thus determined to said movement-compensating device (107) in order that said movement-compensating device may provide a feedback in the optoelectronic system in order to compensate for the movement in the image being acquired by the image sensor, the feedback being provided in the optoelectronic system with a frequency lower than or equal to the movement frequency and consisting in modifying a position of a movable element (102) contributing to make a light beam (100) converge toward the image sensor (104), the image sensor (104) producing each image from said light beam (100) ;
      the device furthermore comprising means for determining an inverse matrix of the conversion matrix, comprising:

         - means for obtaining (500) a reference image from an original image acquired by the image sensor,
         - means for simulating (501) first values of the signals representative of a movement, these values corresponding to those obtained by the high-frequency movement sensor when the high-frequency movement sensor is subjected to a light beam corresponding to the reference image,
         - means for applying (504) movements of preset movement values to the reference image to obtain a set of displaced images,
         - means for simulating (505), for each displaced image of the set of displaced images, second values of the signals representative of a movement, these values corresponding to those obtained by the high-frequency movement sensor when the high-frequency movement sensor is subjected to a light beam corresponding to the displaced image, and,
         - means for determining (508) the inverse matrix of the conversion matrix on the basis of the first and second values of the signals representative of a movement, which values are obtained by the high-frequency movement sensor, and of the preset movement values.

9. System according to Claim 8, wherein a corrective filter is inserted in front of the image sensor and/or in front of the high-frequency sensor in order to compensate for a difference between a spectral response of the image sensor and a spectral response of the high-frequency movement sensor.

10. Computer-program product, **characterized in that** it contains instructions to implement, by means of a device (110) for processing high-frequency movements belonging to a system according to Claim 8, the method according to any one of Claims 1 to 7, when said program is executed by a processor of said device.

11. Storing means, **characterized in that** they store a computer program containing instructions to implement, by means of a device (110) for processing high-frequency movements belonging to a system according to Claim 8, the method according to any one of Claims 1 to 7 when said program is executed by a processor of said device.

Dispositif de
compensation
de
mouvement

107

Capteur
mouvement

106

100

10

101    102    103    104

105

Fig. 1A

Capteur
mouvement

106

Dispositif de
compensation
de
mouvement

107

110

Dispositif de traitement

Capteur HF

109

100

11

108

101    102    103    104

105

Fig. 1B

1100
CPU

1101
RAM

1102
ROM

1105

HDD
1103

COM
1104

110

Fig. 2

Y

A | B

300

X

C | D

Fig. 3

Obtention signal
capteur HF:
$(\Delta X, \Delta Y)$

401

Détermination
mouvement
pixelique
$(\Delta x, \Delta y)$

402

Rétroaction
dispositif
d'acquisition

403

Nouveau
signal
capteur
HF?

404

Nouveau
signal reçu

Fig. 4

Fig. 5

Fig. 6

**EP 3 170 303 B1**

**RÉFÉRENCES CITÉES DANS LA DESCRIPTION**

**Documents brevets cités dans la description**

- US 20030197787 A1
- US 5218442 A